(19) Europäisches Patentamt
European Patent Office
Office européen des brevets

(11) **EP 1 578 153 B1**

(12) **EUROPEAN PATENT SPECIFICATION**

(45) Date of publication and mention
of the grant of the patent:
**13.08.2008 Bulletin 2008/33**

(51) Int Cl.:
*H04Q 7/28* (2006.01)          *H04Q 7/32* (2006.01)
*H04Q 7/38* (2006.01)

(21) Application number: **05102122.8**

(22) Date of filing: **17.03.2005**

(54) **Direct mode call information storage in TETRA wireless communication unit**

Direct mode Anrufinformationaufzeichnung in einer drahtlosen Kommunikationseinheit nach dem TETRA-Standard

Enregistrement des informations des appels en mode direct dans une unité de communication sans fil selon le standard TETRA

(84) Designated Contracting States:
**AT BE BG CH CY CZ DE DK EE ES FI FR GB GR HU IE IS IT LI LT LU MC NL PL PT RO SE SI SK TR**

(30) Priority: **17.03.2004 GB 0405881**

(43) Date of publication of application:
**21.09.2005 Bulletin 2005/38**

(73) Proprietor: **MOTOROLA INC.**
**Schaumburg, IL 60196 (US)**

(72) Inventors:
• **Serfaty, Salomon**
**67899, Tel Aviv (IL)**
• **Shahaf, Mark**
**67899, Tel Aviv (IL)**

(74) Representative: **McCormack, Derek James et al**
**Optimus**
**Grove House, Lutyens Close,**
**Chineham Court,**
**Basingstoke,**
**Hampshire RG24 8AG (GB)**

(56) References cited:
WO-A-01/22755          DE-A1- 10 004 847
US-A1- 2003 144 003

**Description**

**Field of the Invention**

This invention relates to a wireless communication system and a method of operation therein. In particular, the invention relates to monitoring and recording of information relating to communications.

**Background of the Invention**

Wireless communication systems, for example cellular telephony or private mobile radio (PMR) communication systems, typically provide for radio telecommunication links to be arranged between a number of wireless communication units, comprising both handheld and vehicle-mounted units, often referred to as mobile stations (MSs).

In a wireless private mobile radio (PMR) communication system, such as the TErrestrial Trunked RAdio (TETRA) system defined by the European Telecommunications Standards Institute (ETSI), it is known that an MS may operate outside a dedicated network coverage area by communicating in a direct communication link with at least one other MS. Such a communication mode is generally referred to as Direct Mode Operation (DMO). This term is in contrast to Trunked Mode operation (TMO) that enables the MS to work within network coverage, with communications controlled and facilitated by a switching and management infrastructure (SwMI). Hence, when an MS operates in DMO, there is no system controller and therefore no centralised timing synchronisation, to synchronise the timing of communications between MSs. In this mode of operation, subscriber units can directly communicate among themselves as if they were in a conventional fixed communication environment.

Even when within the coverage of the TETRA Trunking system, some users may opt for using DMO so that the traffic cannot be intercepted or heard by unauthorized personnel outside the intended operating group. For example, this may be the communication scenario employed by a SWAT team operation.

Another scenario where DMO can be used is when several units, say Police, Fire brigade and Emergency Medical Services arrive at a scene of an incident. Although dynamic regrouping in a TETRA Trunking system can be used to group all the Emergency services to a single or a reduced number of groups, they may opt for a simpler and faster way of coordinating their communications by using the DMO mode of operation.

As mentioned earlier, when the communications are performed using the Trunking system, all communications are routed through the Trunking infrastructure. In such systems, the recording or logging of voice communications is carried out at a central location of the system, for example a central controller or primary base station. A central location is the optimal position for performing voice recording as all voice communications pass through such a position. An example of the necessity for logging voice communications is found in Public Safety Systems where a record of say, a police operation is logged. The information stored in such a process includes the step by step record of actual voice communication including what information was provided, at what time, who was involved, etc. Thus, a properly equipped console in the infrastructure can record all the communication events to be replayed afterwards if there is a need to investigate the facts afterwards.

However, the TETRA DMO standard provides no solution where there is a communication requirement to investigate the occurrence of operational events.

Error loggers and 'black-box' recorders are known. Such devices can be used in a DMO system by employing a radio receiver in the vicinity of the operational area. Such a radio receiver could be configured to listen and record all voice or other communication traffic. However, such an approach would have the following disadvantages, particularly in a DMO scenario:

(i) For a mobile force, there can be no guarantee that the receiver covers the entire area of operation as the mobile force moves from a first area to a second area;

(ii) In a DMO system, it is possible for several Talkgroups to operate on different frequencies in an ad-hoc fashion. Therefore, the number of receivers needed to cover an incident cannot be known in advance;

(iii) Communications in DMO can be group calls or individual calls. In order to properly listen only to the required traffic, the receiver may have to be programmed with the identity numbers of all relevant groups as well as all individuals;

(iv) Any DM Repeater operating as a call logger may become the weakest link if a secure operation is underway. Any malfunction of the Repeater, whether intentional or not, could jeopardize the entire event/communication recording process; and

(v) The information recorded by a Repeater is limited to its own receiving capabilities, at its particular geographical location. Thus, it would not represent the recorded information as received by the target communication units. Therefore, the recorded information would not represent accurately the actual conditions at the incident/scene.

Thus, there exists a need to provide a wireless communication unit, a wireless communication system and method of efficiently monitoring communication in a wireless DMO scenario for the purposes described above and wherein the aforementioned disadvantages may be alleviated.

WO0122755 describes a mobile radio operating in a direct mode network which collects data from other units operating in the network such as data relating to location of the units and later transfers the data by wireless communication to a despatcher of the fixed network. DE10004847 describes a method in which a SIM card of a mobile radio detects service quality data and transmits the data by wireless communication to a communication network. Neither of these references describes or suggests the present invention now to be described herein.

**Statement of Invention**

In accordance with a first aspect of the present invention there is provided a method of operation in a mobile communication system, the method being as defined in claim 1 of the accompanying claims. Each of the wireless units in the method is capable of communication with a number of second communication unit(s) (for example fixed Repeaters, other mobile units, etc.) and comprises a transceiver for transmitting and/or receiving communications to/from the number of second communication unit(s). A signal processing function is operably coupled to, or comprises, a recording function (recording means) that records a communication event between the wireless direct mode communication unit and a number of second communication unit(s).

Preferably, the recording of information relating to a communication event by a wireless direct mode communication unit is performed for a substantial number, and preferably all, communications that are transmitted or received and decoded by the wireless direct mode communication unit.

The information in the recordings may be stored for a substantial period, e.g. a day or more, a week or more, a month or more, or a year or more, depending on system operational and/or use requirements.

In accordance with a second aspect of the present invention there is provided a system as defined in claim 15 of the accompanying claims.

The method according to the first aspect of the invention involves recording on a removable data storage element (234) in each mobile unit information relating to a communication event in a wireless direct mode communication system. The method comprises the step of monitoring, by a mobile wireless communication unit, communications in a direct mode to/from a number of second communication unit(s), and recording information relating to a communication event relating to a communication between the wireless direct mode communication unit and a number of second communication unit(s).

In this manner, by provision of a mechanism for a number of DM units to record communication events that they are party to, it is possible to track a performance of and/or track messages sent to and/or received from the DM communication unit in direct mode. In particular, it is possible to remove the data storage elements from the units; and upload the time stamped data stored on the data storage elements to a computer adapted to analyse the data recorded during a time period of interest on the elements. It is thereby possible to utilise the recorded information in the computer to re-enact an incident at a later time and/or identify how a communication unit/user reacted to a given scenario in a DMO communication system.

Further features of the present invention are as defined in the accompanying dependent claims and are disclosed in the embodiments of the invention to be described.

Embodiments of the present invention will now be described by way of example with reference to the accompanying drawings, in which:

**Brief Description of the Drawings**

FIG. 1 illustrates a wireless direct mode communication system adapted in accordance with preferred embodiments of the present invention;

FIG. 2 illustrates a wireless direct mode communication unit adapted in accordance with preferred embodiments of the present invention;

FIG. 3 illustrates a flowchart of a mechanism to monitor and record a communication event by a TETRA DMO communication unit according to a preferred embodiment of the present invention;

FIG. 4 illustrates an architecture to download and subsequently analyse and re-enact information relating to a direct mode communication event, according to the preferred embodiments of the present invention; and

FIG. 5 illustrates an example information record, in accordance with preferred embodiments of the present invention.

**Description of Preferred Embodiments**

The inventive concepts of the present invention propose a solution to the aforementioned problems by incorporating a recording mechanism in a number, and preferably all, subscriber units (MSs) that are activated in DMO. In this regard, recordings made by such subscriber units may then be subsequently analysed to re-enact a sequence of events and communications. Advantageously, the provision of such a mechanism allows the authorised agency to efficiently re-enact communications and events in a wireless DMO scenario.

Although the preferred embodiment of the present invention is described with reference to a wireless TETRA DMO subscriber unit, it is within the contemplation of the present invention that the inventive concepts can be applied equally to any MS-to-MS wireless protocol, other wireless DMO communication units and other timing structures or protocols. It is also envisaged that the inventive concepts can also be incorporated, in general, in any subscriber unit such as one operating in TMO or in 'conventional' walkie-talkie type communication systems having no infrastructure.

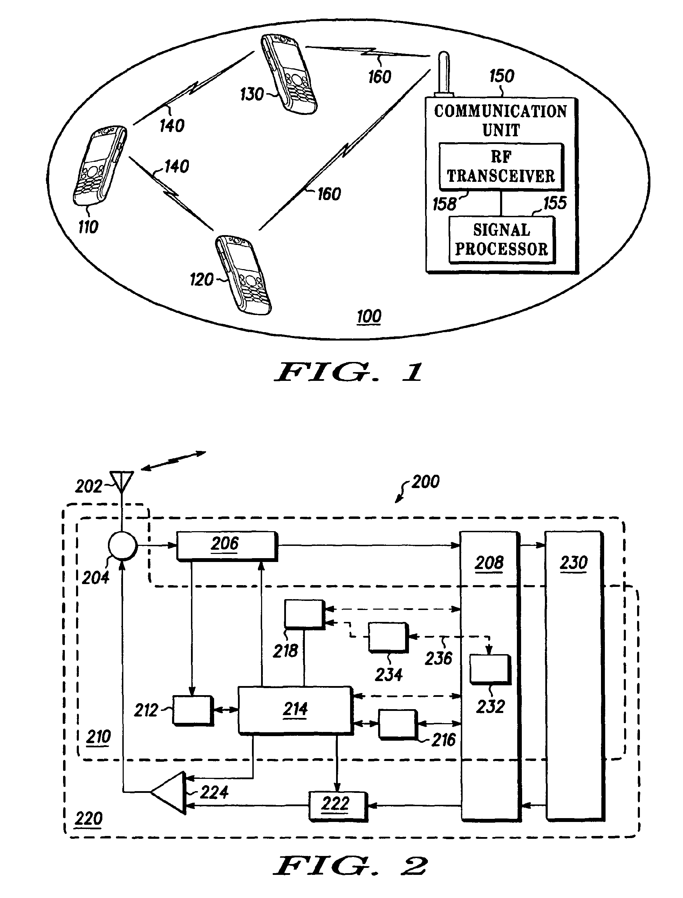

In wireless DMO communication systems, such as that illustrated in FIG. 1, there are typically two methods of communicating between MSs. A first method is a direct communication between two MSs, as provided for in 'direct-mode' communication in a PMR communication system. Here, a first MS 110 is able to set up a direct communication 140 with a second MS 120 or a third MS 130. In a true DMO communication system many MSs will be able to communicate with each other at any instant in time, with only three MSs 110, 120 and 130 shown in FIG. 1 for clarity purposes.

A second method uses one or more intermediary communication unit(s) 150 to forward a communication 160 received from, say the second MS 120 to be re-transmitted or routed to, say, the third MS 130. The intermediary communication unit is preferably a DM gateway or repeater that includes a radio frequency transceiver circuit 158 operably coupled to a signal processor function 155.

Referring now to FIG. 2, there is shown a block diagram of a wireless DMO TETRA subscriber unit 200 adapted to support the inventive concepts of the preferred embodiments of the present invention. The wireless subscriber unit 200 contains an antenna 202 preferably coupled to a duplex filter or antenna switch 204 that provides isolation between a receiver chain 210 and a transmitter chain 220 within the wireless subscriber unit 200. As known in the art, the receiver chain 210 typically includes receiver front-end circuitry 206 (effectively providing reception, filtering and intermediate or base-band frequency conversion). The front-end circuit is serially coupled to a signal processing function 208. An output from the signal processing function is provided to a user-interface 230, which may comprise a display, loudspeaker, etc.

The receiver chain 210 also includes received signal strength indicator (RSSI) circuitry 212 (shown coupled to the receiver front-end 206, although the RSSI circuitry 212 could be located elsewhere within the receiver chain 210). The RSSI circuitry is preferably arranged to provide signal strength information relating to communications received and decoded from one or more other communication units. The RSSI circuitry 212 is coupled to a controller 214 for maintaining overall subscriber unit control. The controller 214 is also coupled to the receiver front-end circuitry 206 and the signal processing function 208 (generally realised by a digital signal processor (DSP)). The controller 214 may therefore receive bit error rate (BER) or frame error rate (FER) data from decoded signals. The controller 214 is coupled to the memory device 216 for storing operating regimes, such as decoding/encoding functions and the like. A timer function 218 is typically coupled to the controller 214 to control the timing of operations (transmission or reception of time-dependent signals) within the wireless subscriber unit 200.

The timer 216, in conjunction with the signal processing function 208 or controller 214, is configured to properly synchronize the receiver/transmitter operation to all other DM MSs. Alternatively, it is envisaged that the timer may use a common universal time reference. A preferred example of a common universal time reference is global positioning system (GPS), where a GPS receiver could also be used to provide this common reference clock.

As regards the transmit chain 220, this essentially includes user-interface 230 comprising elements such as a microphone, keypad, etc. coupled in series to a transmitter/modulation circuit 222. Thereafter, any transmit signal is passed through a RF power amplifier stage 224 to be radiated from the antenna 202. The transmitter/modulation circuitry 222 and the power amplifier 224 are operationally responsive to the controller, with an output from the power amplifier 224 coupled to the duplex filter or antenna switch 204. The transmitter/modulation circuitry 222 and receiver front-end circuitry 206 comprise frequency up-conversion and frequency down-conversion functions (not shown).

In accordance with the preferred embodiment of the present invention, the signal processing function 208 has been adapted to include, or control a separate, channel monitoring function 232. The channel monitoring function 232 monitors a communication between the MS 200 and any other communication unit such as a number of DM MSs and passes any information to the signal processing function 208. The signal processing function 208, together with a time stamp provided by the timer 218, then records timing information of that call to memory element 216.

Once a buffer in memory element 216 is full, or the signal processing function 208 determines that the information should be stored, the signal processing function 208 preferably records information in a Secure Digital (SD) card 234. Such SD cards, available in sizes from 8 Mbytes to 512 Mbytes and with dimensions of:

$$L * W * H = 32 * 24 * 2.1 \text{ mm}$$

and a weight of 2.0 grams, as illustrated at:
(http://www.sandisk.com/download/Product%20Brochures/secu redigital_datasheet020625.pdf).

Furthermore, the security features of the SD card 234 can be utilised to avoid unwanted reproduction and tampering of its contents. For example, it is envisaged that the content of the SD card 234 can be prevented from being copied, as detailed in the Secure Digital Music Initiative (SDMI) at sdmi.org.

As such, the SD card 234 provides a perfect candidate for this application, even though it is envisaged that other secure mechanisms can be devised and implemented if the security features of the SD card do not satisfy customer-specific operational requirements. In addition, a skilled artisan will appreciate that alternative information storage mechanisms could be used, in different systems or radio units.

The signal processing function 208 records information to the SD card 234 via an interface 236, which is a four data wire SD bus, plus power supply and clock lines, or a simple serial port interface (SPI) bus, comprising a power supply, clock, data and chip select. Using the SPI bus 236, data transfer can be performed at up to 10 Mbytes/sec. Using the SPI bus 236, the transfer rate reduces to 2.5 Mbytes/sec, which is more than enough for the recording purposes.

With regard to a required data size of the SD card 234, let us assume that the voice is recorded to the card using, for example, a voice compression algorithm, such as adaptive code excited linear predictive (ACELP) coding at a rate of 4.567 kbps. Let us also assume a 20% overhead to record all the extra information, which provides a total memory requirement of 5.48 kbps. With this in mind, Table 1 indicates, for the available SD card sizes, the possible recording times.

Table 1:

| Card Size (Mbytes) | Recording time (seconds) | Recording time (hours) |
|---|---|---|
| 8 | 1460 | 0.41 |
| 16 | 2919 | 0.81 |
| 32 | 5839 | 1.62 |
| 64 | 11678 | 3.24 |
| 128 | 23356 | 6.49 |
| 256 | 46712 | 12.98 |
| 512 | 93424 | 25.95 |

As shown in Table 1, an SD card 234 with a data size of sixty four Mbytes can record more than three hours of voice traffic. It is noteworthy that, even in a complicated operation, the channel is not active for 100% of the time. Hence, assuming that the voice recording operation is linked to a voice activity detection (VAD) circuit (not shown), and that only true voice frames are recorded, this number should be divided by the assumed activity in the channel to obtain the time length of the operation that can be covered with the SD card 234.

In accordance with the preferred embodiment of the present invention, information to be recorded is buffered in the memory element 216 and written in bursts to the SD card 234. This embodiment preferably uses a double buffering mechanism, where one buffer is filled while the content of the second buffer is being written to the SD card 234.

The writing cycle to an SD card 234 is preferably composed of a write command of the correct data, plus an acknowledgement from the SD card 234 stating that the writing operation has been completed. As previously indicated, writing can be performed at speeds up to of 2.5 Mbytes/sec, and using the SPI bus 236. If we conservatively assume that the protocol reduces this writing speed to say 500 Kbytes/sec, and that a typical buffer size is only 50 Kbytes, the data will be written in '0.1' seconds to the SD card 234.

At a rate of 5.48 Kbits/sec, the 50 Kbyte buffer is able to accumulate '72' seconds of traffic. The write duty cycle of the SD card 234 will, in this case, be 0.1%. The current drain of the SD card 234, say at 3.6 V in write mode is, 35 mA, while in standby mode it will be 100 μA. Using this profile, the average current drain will be 103 μA. This power consumption is negligible compared, for example, to the 125 mA current drain of a typical TETRA MS in a standby mode of operation.

Therefore, it is possible to conclude that the addition of an SD card 234 with the architecture shown in FIG. 2 will not affect in any significant way the power consumption of the MS unit 200.

Thus, in this manner, the MS 200 is configured to record all traffic, and preferably supplementary information, from each one of the MSs where a communication is received, or transmitted to, including signalling information. It is envisaged that the traffic may be voice, circuit data and/or short data messages provided though the Short Data Services (SDS) available in DMO. In the supplementary information, the preferred mechanism comprises any graphical user interface (GUI) information that has been presented to the user via the user interface 230 as well as any GUI operation performed by the user of the MS 200. This would represent the actions taken by the user in the form of radio operation (s) as well as any information that was presented to the user during his/her operation at the incident/scene.

As mentioned earlier, the recording operation to the SD card 234 is preferably time stamped with a time reference provided by the timer function 216 or a GPS device. If a GPS receiver is used, the recording may advantageously include the location of the MS at the time where the recording was performed. This location information may be stored as supplementary information. If no universal time base is available in the MS 200, it is envisaged that the MS 200 may employ a coarse synchronization method by having all the users insert, at a given time, the exact time. Such a technique is commonly referred to as an 'align the clock' action, which may be initiated prior to the commencement of, say, a new police shift. This will result in some inaccuracy in the timing, but may still serve a purpose of a coarse re-enactment of the facts.

Even if no common timing information is available or in a case where a MS is powered up after a common time base has been initialised, the individual SD cards are preferably configured to contain any information sent from and/or received by the individual MS, which could be valuable in re-enacting an operation.

If a secure cryptographic mode is used by the MS during the operation, it is proposed in an enhanced embodiment of the present invention to include in the recording process the index of the key being used for a specific transaction. In this manner, the recorded data can be decrypted at a later time.

The various adapted components within the TETRA DMO MS 200 can be realised in discrete or integrated component form. More generally, the functionality associated with controlling a channel monitoring operation and recording communication events may be implemented in a respective communication unit in any suitable manner. For example, new apparatus may be added to a conventional communication unit, or alternatively existing parts of a conventional communication unit may be adapted, for example by replacing memory or reprogramming one or more processors therein. As such, the required adaptation may be implemented in the form of processor-implementable instructions or data stored on a storage medium, such as an SD card or floppy disk, hard disk, programmable read-only memory (PROM), random access memory (RAM) or any combination of these or other storage media.

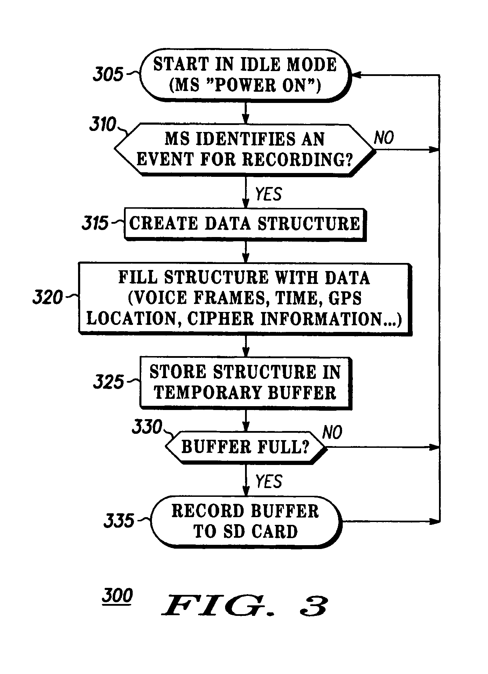

Referring now to FIG. 3, a flowchart 300 illustrates the preferred mechanism for implementing the inventive concepts of the present invention. Without any loss of generality, the example provided below will refer primarily to voice traffic, although it is equally applicable to, for example, circuit data and short data services.

Initially, the identity of the MS is recorded in the SD card so that it can be identified at a later time. The process commences in step 305 with the MS being idle. The MS remains in this mode until an event is identified in step 310. An example of an appropriate event is when a user of the MS activates the push-to-talk (PTT) and starts to transmit voice.

Upon identification of an event in step 310, a data structure is created, as shown in step 315. The data structure may be configured to comprise, in step 320, one or more of the following data items:

    (i) Action = PTT_activation;
    (ii) Originator = Individual_ID;
    (iii) Destination = Individual_ID or Group_ID;
    (iv) Service type;
    (v) Cryptographic_key_index;
    (vi) Presence check, etc;
    (vii) Time stamp;
    (viii) GPS position;
    (ix) End-to-end encryption synchronisation; and
    (x) Voice_frame1, voice_frame2,....,.

When the user deactivates the PTT, a new data structure is preferably created with, for example, one or more of the following data items:

    (i) Action = PTT_deactivation;
    (ii) Originator = Individual_ID;
    (iii) Time stamp; and
    (iv) GPS position.

The above structures are preferably stored in a temporary buffer, as shown in step 325. A determination is preferably made as to whether the temporary buffer is full, in step 330. If the temporary buffer is not full, in step 330, the data items continue to be recorded and stored. If the temporary buffer is full, in step 330, the data structure is preferably recorded to, say, the SD card immediately. Alternatively, it is envisaged that the data structure may be buffered in a RAM memory within the MS (say memory element 218 of FIG. 2). In a yet further alternative embodiment, the data structure may be recorded to the SD card or buffered in the RAM memory after a predetermined time-out. In this manner, the buffering may be used to reduce the power consumption in the MS since, if there is no need to write to the SD card, the MS can be placed in standby mode.

It is also envisaged that an MS receiving information could also set a data structure that includes the information received, and store the data as described above. As an example, the receiving subscriber data structure could comprise one or more of the following data items:

(i) Action = receiving a service;
(ii) Originator = Individual_ID;
(iii) Destination = Individual_ID or Group_ID;
(iv) Service type;
(v) Cryptographic_key_index;
(vi) Presence check, etc;
(vii) Time stamp;
(viii) GPS position;
(ix) End-to-end encryption synchronisation; and
(x) Voice_frame1, voice_frame2,...,.

Thus, the aforementioned lists of data items are simple examples of data that can be recorded in a typical voice conversation between DM users. It is within the contemplation of the present invention that other elements may be recorded, for example together with time stamp and location information. Such additional elements comprise one or more of the following data items:

(i) An intention of a MS user to perform a preemption operation, so as to acquire a communication channel;
(ii) Unsuccessful PTT (say, due to channel busy conditions); and
(iii) Other GUI actions performed by the user of the subscribers.

In general, it is envisaged that the recording process records any voice or data traffic on the channel plus any action performed by the MS user. Thus, in a subsequent investigation of the case, or its re-enactment, it is possible to access voice and/or other traffic or signalling that occurred in the system as well as any user behaviour. Advantageously in this context, as an example, a user could not claim that (s)he did not send or receive a certain message as the fact would have been recorded. Similarly, a user could not argue that (s)he was not alerted of a certain situation, as all alerts and indications will be recorded in his/her SD card.

It is envisaged that by recording all traffic, including any user interaction via the GUI and the GUI information presented to the user, enables all of the communication events relating to a particular incident to be reproduced.

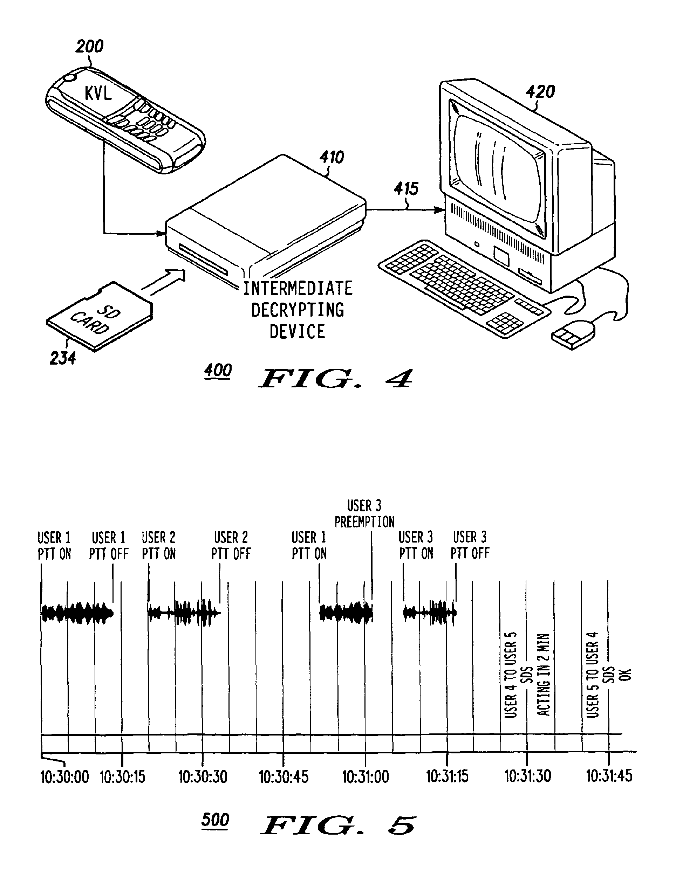

At the end of the event/incident, the MS users preferably remove their SD cards from the MS. If there is a need, the SD cards may then be transported to a central location and their content uploaded to, say, a computer, as illustrated in the uploading architecture diagram 400 of FIG. 4. Such a central computer 420 is preferably configured with a software application that is able to re-enact the entire event/incident. In this case, the computer 420 may use the full capabilities of the SD bus 415. The reading rate of the SD bus 415 may be configured at 10 Mbytes/sec. This means that a 64 Mbytes card can be read in as little as 6.4 seconds.

An application in the central computer 420 is preferably based on a time tag, in order to reproduce all of the traffic and events that were recorded from all the users. A very simplified representation 500 of the data that may be collected is depicted in FIG. 5. All the events, traffic etc. can then be reproduced as they were recorded during the event/incident.

As indicated previously, in an enhanced embodiment of the present invention and referring back to FIG. 4, the information transmitted in the channel could be encrypted with customer-specific cryptography, known as end-to-end encryption. Thus, in accordance with the enhanced embodiment of the present invention, it is proposed that the data structure is stored with an index of the key used for encryption purposes, i.e. within the data that is stored. In the proposed structure, for example, cryptographic_key_index and end-to-end encryption sync. data is used to decipher the content that is encrypted.

It is noteworthy that the actual encryption 'key' is never stored on the recording MS, thereby minimising any potential security threat. In this case, prior to downloading the information to the central computer, the data must be properly decrypted. The decryption operation may be performed with special hardware 410, acting as an intermediate device between the SD card 232 and the computer 420. In this case, using the index of the used keys, they can be downloaded from a Key Variable Loader (KVL) 430, or from a Key Provisioning Centre, to the intermediate decrypting device 410. The information can therefore be decrypted and loaded to the computer 420 'clear' for further analysis. It is envisaged that intermediate decrypting device 410 may be configured to support several SD cards 232 at the same time, thereby accelerating the downloading process. Alternatively, but with less security provision, the process may be performed in software in the computer 420.

It is also within the contemplation of the present invention that any recorded information can be transferred to a fixed point, such as the central computer, by any appropriate means, for example via over-the-air transmission. An over-the-air transmission download of recorded information may be implemented whenever the communication system is lightly loaded with regard to traffic communication and the MS is within communication range of the fixed unit.

It will be understood that the wireless communication unit and method of recording a communication event therein, as described above, provide at least one or more of the following advantages:

(i) Ability to track a communication unit's performance in a DMO communication system;
(ii) Ability to track messages that a communication unit sends and/or receives in a DMO communication system;
(iii) Ability to re-enact an incident at some later time; and
(iv) Ability to identify how a communication unit/user reacted to a given scenario in a DMO communication system.

Whilst specific, and preferred, implementations of the present invention are described above, it is clear that one skilled in the art could readily apply variations and modifications of such inventive concepts.

Thus, the preferred embodiment of the present invention has provided a wireless communication system and a method of recording a communication event that substantially alleviates the aforementioned problems with prior art arrangements.

## Claims

1.    A method of operation in a wireless communication system including the step of:

(a) recording in each of a plurality of mobile communication units (110, 120, 130) time stamped data of events relating to direct mode communications in which the units are participating; the recording (335) being made on a removable data storage element (234); and **characterised in that** the method further includes the steps of:
(b) removing the data storage elements from the units;
(c) transporting the data storage elements to the location of a computer (420) adapted to receive uploaded data from the data storage elements;
(c) uploading the time stamped data stored on the data storage elements to the computer (420); and
(c) analysing by the computer the uploaded data recorded during a time period of interest on the elements.

2.    A method according to claim 1 wherein each of the removable data storage elements is a memory card, a compact flash or a memory stick.

3.    A method according to claim 2 wherein each of the removable data storage elements is a memory card which is a secure digital card.

4.    A method according to any one of the preceding claims which further includes the step of running a software application on the computer using the time stamped data uploaded from the data storage elements to re-enact an incident or event which occurred during the time period of interest or to identify how a communication unit or a user reacted to a given scenario in a communication system during the time period of interest.

5.    A method according to any one of the preceding claims wherein the time stamped data recorded on each of the data storage elements includes encrypted data and the method includes decrypting the encrypted data before it is uploaded to the computer.

6.    A method according to claim 5 wherein the decryption is carried out by an intermediate decrypting device.

7.    A method according to claim 5 or claim 6 wherein the time stamped data recorded on each data storage element includes an index of the key used to encrypt the data.

8.    A method according to any one of the preceding claims wherein the recorded time stamped data includes data or information other than speech signals.

9. A method according to any one of the preceding claims wherein the recorded time stamped data comprises one or more of the following:

(i) user interface information that has been presented to a user of the unit in which the time stamped data has is recorded;
(ii) user interface information that has been entered by a user of the unit in which the time stamped data is recorded;
(iii) a speech signal;
(iv) user communicated data or signalling communication data;
(v) an identity of the unit or of a user of the unit in which the time stamped data is recorded;
(vi) an index of a key used for a specific transaction when the unit in which the time stamped data is recorded operates in a secure cryptographic mode;
(vii) a communication relating to a short data service; and
(viii) an action relating to activation or deactivation of the unit in which the time stamped data is recorded.

10. A method according to any one of the preceding claims wherein the time stamped data recorded relates to all wireless communications transmitted to and received by the unit when operating in a direct mode.

11. A method according to any one of the preceding claims wherein the operation of each removable data storage element to record time stamped data in each mobile communication unit is carried out in association with a signal processor of the unit.

12. A method according to any one of the preceding claims wherein, in the recording of time stamped data in each mobile communication unit, information relating to the communication event is first stored in a memory element of the unit prior to downloading to the removable data storage element.

13. A method according to any one of the preceding claims further wherein each unit includes a voice activity detector and the recoding of time stamped data is carried out selectively in response to an output from the voice activity detector.

14. A method according to any one of the preceding claims wherein the direct mode communications carried out by the mobile communication units are carried out in accordance with TETRA standard operating protocols.

15. A wireless communication system (100) including a plurality of mobile communication units (110, 120, 130) operable to communicate with one another in a direct mode, a plurality of removable data storage elements (234) each operable to be included in one of the units to record time stamped data of events relating to direct mode communications in which the units have participated; and a computer (420) adapted (i) to receive uploaded data from data storage elements which have been included in the units to record time stamped data and which have been removed from the units and transported to the location of the computer (420); and to analyse the uploaded data recorded during a time period of interest on the elements.

**Patentansprüche**

1. Betriebsverfahren in einem drahtlosen Kommunikationssystem, das die folgenden Schritte umfasst:

(a) Aufzeichnen, in jeder von einer Mehrzahl von mobilen Kommunikationseinheiten (110, 120, 130), zeitgestempelter Daten ("time stamped data") von Ereignissen, die sich auf Direktbetriebsartkommunikationen beziehen, an denen die Einheiten teilnehmen; wobei das Aufzeichnen (335) auf einem demontierbaren Datenspeicherelement (234) vorgenommen wird; und **dadurch gekennzeichnet, dass** das Verfahren weiterhin die folgenden Schritte umfasst:
(b) Entfernen der Datenspeicherelemente von den Einheiten;
(c) Transportieren der Datenspeicherelemente zu dem Standort eines Computers (420), der geeignet ist, um hochgeladene Daten von den Datenspeicherelementen zu empfangen;
(c) Hochladen der in den Datenspeicherelementen gespeicherten zeitgestempelten Daten auf den Computer (420); und

(c) Analysieren der hochgeladenen Daten, die während einer Zeitperiode von Interesse in den Elementen aufgezeichnet worden sind, durch den Computer.

2. Verfahren gemäß Anspruch 1, wobei jedes der demontierbaren Datenspeicherelemente eine Speicherkarte, ein kompakter Flash- oder Speicher-Stick ist.

3. Verfahren gemäß Anspruch 2, wobei jedes der demontierbaren Datenspeicherelemente eine Speicherkarte ist, die eine sichere digitale Karte ist.

4. Verfahren gemäß einem der vorangehenden Ansprüche, das weiterhin den folgenden Schritt umfasst: Betreiben einer Softwareanwendung auf dem Computer unter Verwendung der aus den Datenspeicherelementen hochgeladenen zeitgestempelten Daten, um eine Begebenheit oder ein Ereignis, das während der Zeitperiode von Interesse stattfindet, neu aufzuführen, oder zu identifizieren, wie eine Kommunikationseinheit oder ein Anwender auf ein gegebenes Szenario in einem Kommunikationssystem während der Zeitperioden von Interesse reagieren.

5. Verfahren gemäß einem der vorangehenden Ansprüche, wobei die in jedem der Datenspeicherelemente aufgezeichneten zeitgestempelten Daten verschlüsselte Daten umfassen und das Verfahren ein Entschlüsseln der verschlüsselten Daten umfasst, bevor sie in den Computer hochgeladen werden.

6. Verfahren gemäß Anspruch 5, wobei die Entschlüsselung durch eine Zwischenentschlüsselungsvorrichtung ausgeführt wird.

7. Verfahren gemäß Anspruch 5 oder Anspruch 6, wobei die in jedem Datenspeicherelement aufgezeichneten zeitgestempelten Daten einen Index des Schlüssels umfassen, der verwendet wird, um die Daten zu verschlüsseln.

8. Verfahren gemäß einem der vorangehenden Ansprüche, wobei die aufgezeichneten zeitgestempelten Daten andere Daten oder Informationen als Sprachsignale umfassen.

9. Verfahren gemäß einem der vorangehenden Ansprüche, wobei die aufgezeichneten zeitgestempelten Daten umfassen:

(i) Anwenderschnittstelleninformationen, die dem Anwender der Einheit präsentiert worden sind, in der die zeitgestempelten Daten aufgezeichnet werden;
(ii) Anwenderschnittstelleninformationen, die durch den Anwender der Einheit eingegeben worden sind, in der die zeitgespeicherten Daten aufgezeichnet werden,
(iii) ein Sprachsignal;
(iv) Anwenderkommunizierte Daten oder Signalisierungskommunikationsdaten;
(v) eine Identität der Einheit oder eines Anwenders der Einheit, in der die zeitgestempelten Daten aufgezeichnet werden;
(vi) einen Index eines Schlüssels, der für eine spezifische Transaktion verwendet wird, wenn die Einheit, in der die zeitgestempelten Daten aufgezeichnet werden, in einer sicheren Verschlüsselungsbetriebsart arbeitet;
(vii) eine Kommunikation, die sich auf eine SMS bezieht; und/oder
(viii) eine Handlung, die sich auf eine Aktivierung oder Deaktivierung der Einheit bezieht, in der die zeitgestempelten Daten aufgezeichnet werden.

10. Verfahren gemäß einem der vorangehenden Ansprüche, wobei sich die aufgezeichneten zeitgestempelten Daten auf alle drahtlosen Kommunikationen beziehen, die zu der Einheit übertragen und von ihr empfangen werden, wenn sie in einer Direktbetriebsart arbeitet.

11. Verfahren gemäß einem der vorangehenden Ansprüche, wobei der Betrieb eines jeden demontierbaren Datenspeicherelementes, um zeitgestempelte Daten in jeder mobilen Kommunikationseinheit aufzuzeichnen, in Verbindung mit einem Signalprozessor der Einheit ausgeführt wird.

12. Verfahren gemäß einem der vorangehenden Ansprüche, wobei bei dem Aufzeichnen von zeitgestempelten Daten in jeder mobilen Kommunikationseinheit Informationen bezüglich des Kommunikationsereignisses zuerst in einem Speicherelement der Einheit gespeichert werden, bevor sie in das demontierbare Datenspeicherelement heruntergeladen werden.

**13.** Verfahren gemäß einem der vorangehenden Ansprüche, wobei weiterhin jede Einheit einen Sprachaktivitätsdetektor umfasst und das Aufzeichnen von zeitgestempelten Daten selektiv in Reaktion auf eine Ausgabe aus dem Sprachaktivitätsdetektor ausgeführt wird.

**14.** Verfahren gemäß einem der vorangehenden Ansprüche, wobei die durch die mobilen Kommunikationseinheiten ausgeführten Direktbetriebsartkommunikationen gemäß TETRA-Standard-Betriebsprotokollen ausgeführt werden.

**15.** Drahtloses Kommunikationssystem (100), das umfasst: eine Mehrzahl von mobilen Kommunikationseinheiten (110, 120, 130), die betreibbar sind, um miteinander in einer Direktbetriebsart zu kommunizieren, eine Mehrzahl demontierbarer Datenspeicherelemente (234), wobei jedes betreibbar ist, um in einer der Einheiten enthalten zu sein, um zeitgestempelte Daten von Ereignissen aufzuzeichnen, die sich auf Direktbetriebsartkommunikationen beziehen, an denen die Einheiten teilgenommen haben; und einen Computer (420), der adaptiert ist (i), um hochgeladene Daten von Datenspeicherelementen zu empfangen, die in den Einheiten eingefügt worden sind, um zeitgestempelte Daten aufzuzeichnen und die von den Einheiten entfernt und zu dem Standort des Computers (420) transportiert worden sind; und um die während einer Zeitperiode von Interesse in den Elementen aufgezeichneten hochgeladenen Daten zu analysieren.

## Revendications

**1.** Procédé de fonctionnement dans un système de communication sans fil, comprenant les étapes consistant à :

(a) enregistrer dans chacune d'une pluralité d'unités de communication mobiles (110, 120, 130) des données horodatées d'événements concernant des communications en mode direct auxquelles les unités participent ; l'enregistrement (335) étant effectué sur un élément de stockage de données amovible (234) ; et **caractérisé en ce que** le procédé comprend, en outre, les étapes consistant à :
(b) retirer les éléments de stockage de données des unités ;
(c) transporter les éléments de stockage de données sur le lieu d'un ordinateur (420) adapté pour recevoir des données chargées depuis les éléments de stockage de données ;
(c) charger sur l'ordinateur (420) les données horodatées stockées sur les éléments de stockage de données ; et
(c) analyser par l'ordinateur les données chargées qui ont été enregistrées sur les éléments pendant une période de temps d'intérêt.

**2.** Procédé selon la revendication 1, dans lequel chacun des éléments de stockage de données amovibles est une carte mémoire, une carte "Compact Flash" ou une carte "Memory Stick".

**3.** Procédé selon la revendication 2, dans lequel chacun des éléments de stockage de données amovibles est une carte mémoire qui est une carte "Secure Digital Card".

**4.** Procédé selon l'une quelconque des revendications précédentes, qui comprend, en outre, l'étape consistant à exécuter une application logicielle sur l'ordinateur en utilisant les données horodatées chargées depuis les éléments de stockage de données pour reconstituer un incident ou un événement qui s'est produit pendant la période de temps d'intérêt ou pour identifier la manière dont une unité de communication ou un utilisateur a réagi à un scénario donné dans un système de communication pendant la période de temps d'intérêt.

**5.** Procédé selon l'une quelconque des revendications précédentes, dans lequel les données horodatées enregistrées sur chacun des éléments de stockage de données comprennent des données cryptées et le procédé comprend le décryptage des données cryptées avant qu'elles soient chargées sur l'ordinateur.

**6.** Procédé selon la revendication 5, dans lequel le décryptage est exécuté par un dispositif de décryptage intermédiaire.

**7.** Procédé selon la revendication 5 ou la revendication 6, dans lequel les données horodatées enregistrées sur chaque élément de stockage de données comprennent un index de la clé utilisée pour crypter les données.

**8.** Procédé selon l'une quelconque des revendications précédentes, dans lequel les données horodatées enregistrées comprennent des données ou des informations autres que des signaux vocaux.

**9.** Procédé selon l'une quelconque des revendications précédentes, dans lequel les données horodatées enregistrées comprennent une ou plusieurs des données suivantes :

(i) des informations d'interface utilisateur qui ont été présentées à un utilisateur de l'unité dans laquelle les données horodatées sont enregistrées ;

(ii) des informations d'interface utilisateur qui ont été introduites par un utilisateur de l'unité dans laquelle les données horodatées sont enregistrées ;

(iii) un signal vocal ;

(iv) des données communiquées par un utilisateur ou des données de communication de signalisation ;

(v) une identité de l'unité ou d'un utilisateur de l'unité dans laquelle les données horodatées sont enregistrées ;

(vi) un index d'une clé utilisée pour une transaction spécifique lorsque l'unité dans laquelle les données horodatées sont enregistrées fonctionne dans un mode cryptographique sécurisé ;

(vii) une communication concernant un service de messages courts ; et

(viii) une action concernant l'activation ou la désactivation de l'unité dans laquelle les données horodatées sont enregistrées.

10. Procédé selon l'une quelconque des revendications précédentes, dans lequel les données horodatées enregistrées concernent la totalité des communications sans fil transmises à l'unité et reçues par celle-ci, lorsqu'elle fonctionne dans un mode direct.

11. Procédé selon l'une quelconque des revendications précédentes, dans lequel l'opération de chaque élément de stockage de données amovible pour l'enregistrement des données horodatées dans chaque unité de communication mobile est exécutée en association avec un processeur de signaux de l'unité.

12. Procédé selon l'une quelconque des revendications précédentes, dans lequel, dans l'enregistrement des données horodatées dans chaque unité de communication mobile, les informations concernant l'événement de communication sont tout d'abord stockées dans un élément de mémoire de l'unité avant d'être téléchargées dans l'élément de stockage de données amovible.

13. Procédé selon l'une quelconque des revendications précédentes, dans lequel, chaque unité comprend un détecteur d'activité vocale et l'enregistrement de données horodatées est exécuté sélectivement en réponse à un signal de sortie du détecteur d'activité vocale.

14. Procédé selon l'une quelconque des revendications précédentes, dans lequel les communications en mode direct exécutées par les unités de communication mobiles sont exécutées selon les protocoles de fonctionnement de la norme TETRA.

15. Système de communication sans fil (100) comprenant une pluralité d'unités de communication mobiles (110, 120, 130) qui peuvent communiquer entre elles dans un mode direct, une pluralité d'éléments de stockage de données amovibles (234) qui peuvent chacun être inclus dans l'une des unités pour enregistrer des données horodatées d'événements concernant des communications en mode direct auxquelles les unités ont participé ; et un ordinateur (420) adapté (i) pour recevoir des données téléchargées depuis les éléments de stockage de données qui ont été inclus dans les unités pour enregistrer des données horodatées et qui ont été retirés des unités et transportés sur le lieu de l'ordinateur (420) ; et pour analyser les données chargées enregistrées pendant une période de temps d'intérêt sur les éléments.

150

COMMUNICATION
UNIT

RF
TRANSCEIVER

158        155

SIGNAL
PROCESSOR

160

130

140

140

110

140

120

*100*

*FIG. 1*

202

200

204

*206*

*208*        *230*

218

*234*        *236*

*232*

212        *214*

216

*210*

224

*222*

*220*

*FIG. 2*

305 — START IN IDLE MODE (MS "POWER ON")

310 — MS IDENTIFIES AN EVENT FOR RECORDING? — NO

YES

315 — CREATE DATA STRUCTURE

320 — FILL STRUCTURE WITH DATA (VOICE FRAMES, TIME, GPS LOCATION, CIPHER INFORMATION...)

325 — STORE STRUCTURE IN TEMPORARY BUFFER

330 — BUFFER FULL? — NO

YES

335 — RECORD BUFFER TO SD CARD

<u>300</u> *FIG. 3*

*200*

KVL

*410*

*415*

*420*

SD CARD

*234*

INTERMEDIATE DECRYPTING DEVICE

*400* **FIG. 4**

USER 1 PTT ON | USER 1 PTT OFF | USER 2 PTT ON | USER 2 PTT OFF | USER 1 PTT ON | USER 3 PREEMPTION | USER 3 PTT ON | USER 3 PTT OFF

USER 4 TO USER 5 SDS ACTING IN 2 MIN

USER 5 TO USER 4 SDS OK

10:30:00   10:30:15   10:30:30   10:30:45   10:31:00   10:31:15   10:31:30   10:31:45

*500* **FIG. 5**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0122755 A
- DE 10004847